# EUROPEAN PATENT APPLICATION

(11) **EP 3 086 604 A1**
(43) Date of publication of application: **26.10.2016**
(21) Application number: 15001189.8
(22) Date of filing: 22.04.2015
(51) Int. Cl.: H04W 48/18

(54) **METHOD FOR OPERATING A MOBILE DEVICE IN DIFFERENT NETWORKS**

(71) Applicant: TelcoVillage GmbH, 13503 Berlin (DE)
(72) Inventor: Omiridis, Christos, D-13503 Berlin (DE)
(74) Representative: Jungblut, Bernhard Jakob

(57) **Abstract**

The invention relates to a method for operating a mobile device in different networks, wherein the mobile device is operable in the different networks as home mobile device to the networks. When a mobile device requests service from a network which is not the home network of the mobile device, the network sends a service request to an IGW (International Gateway). A Short Message Service Center (SMSC) connected with the IGW sends a pair of a new International Mobile Subscriber Identity (IMSI) and a new Mobile Station International Subscriber Directory Number (MSISDN) to the mobile device. The SIM of the mobile device is reprogrammed and the new IMSI becomes the active IMSI, hence the mobile device can operate in the network as a home mobile device. Additionally, the network core bridges (i.e., sets forwarding rules) the old with the new MSISDN so that third telecommunication devices can contact the mobile device through the old MSISDN.

## Description

### Field of the Invention

The invention relates to a method for operating a mobile device in different networks, wherein the mobile device is operable in the different networks as home mobile device to the networks

### State of the Art and Background of the Invention

A mobile device generally works in a cellular network, e.g. a mobile Network based on the GSM standards. The mobile device needs to authorize itself to the network. For this purpose a SIM device (Subscriber Identity Module) is incorporated in the mobile device, either in form of a card, or fixedly integrated into the electronic circuits of the mobile device. This SIM device comprises a memory in which an IMSI (International Mobile Subscriber Identification) and authorization information are stored. The IMSI consists of the MCC (Mobile Country Code), the MNC (Mobile Network Code), and a 9 or 10 digit number. Authentication information typically comprises an OPC key (Operator Code) and a Ki key (Authentication Key). This information is to authenticate to an AUC (Authentication Center) of a network, if the mobile device requests services from the network.

Each IMSI (stored e.g. in a SIM device) is assigned to one home network. The home network is that network, which has the same MCC and MNC as the IMSI on the SIM device.

Using a SIM device in its home network is economic as only own network resources need to be used and billed to the user of the mobile device. Furthermore, fast data transmission is provided, since data do not need to be backhauled to any other network and transmission standards do not depend on interoperability, i.e. the mobile device can e.g. use LTE (Long Term Evolution) speeds if the network offers LTE.

If the user of a specific mobile device desires to use the mobile device in areas, where the home network is not available (be it in foreign countries, be it in regions of the home country, wherein the home network is not available), the SIM device can be authorized to use services in other/foreign networks. This is called roaming. This is expensive and has technical drawback also, because network resources of at least two networks need to be used (home network and other/foreign network). Data need to be backhauled back to the home network and interoperability between the networks is restricted to a standard common to both networks. If e.g. the other/foreign network uses 3G (Third Generation) mobile standard, then the whole communication is restricted to 3G, even if the home network and the mobile device are capable of operating with LTE standard (and vice versa). It would be ideal, if the mobile device could be operated outside the availability of the home network as if it were in the home network, although using an other/foreign network, i.e. if roaming would not be necessary any more.

One simple approach is that a user obtains additional (to the home network SIM device) SIM devices for all areas in which the mobile device is intended to be used and where the home network is not available. This, however, requires that the SIM device is exchangeable and furthermore that all necessary SIM devices must be carried with the user of the mobile device and selected and inserted depending on where the user is in the moment when the user intends to use the mobile device. This obviously is disadvantageous for several reasons. First, the user must enter in a number of independent contracts with owners of various networks and perhaps even pay deposits (pre-paid, for example), Second, the user needs to remove a SIM device and replace it by another SIM device, depending on which network is available at the instant place where the mobile device shall be used. In particular the latter is cumbersome and carries the risk of damaging the mobile device and/or a SIM device.

The document US 2008/0020755 discloses in one aspect a reprogrammable SIM device, i.e. a SIM device wherein the contents of memories may be altered. In another aspect this document discloses manually reprogramming the SIM device to allow use of the mobile device in different networks, thus avoiding roaming. However, the user still needs to apply manual activities for activation of the mobile device in different networks. This is complicated and less user-friendly.

One general drawback of various solution attempts for avoiding roaming is that if the mobile device is to be contacted by an incoming call or the like, the phone number of the mobile device depends on the network, wherein the mobile device is currently being operated.

### Technical Problem of the Invention

The technical problem of the invention is to provide a method for operating a mobile device in different networks with one reprogrammable SIM device only, wherein the different networks are automatically used as home networks to the mobile device, in particular without the need for a user of the mobile device to do anything other than under normal operation conditions in the home network, independent of whether the home network is available or not. A further technical problem is to provide availability of the mobile device under the same phone number always and everywhere, without the need of roaming.

### Principles of the Invention and Preferred Embodiments

For solving this technical problem the invention teaches a method for operating a mobile device in different networks, wherein the mobile device is operable in the different networks as home mobile device to the networks, wherein the mobile device comprises one SIM (Subscriber Identity Module) device, said SIM device being reprogrammable remotely, wherein said different networks are in communication with an IGW (international gateway) comprised in a network core, wherein the IGW of the network core is programmed connected within the network core with a SMSC (Short Message Service Center) and a MSC (Mobile Switching Center) and/or a NGN (Next Generation Network), comprising the following steps: i) upon successful network search of the mobile device (e.g. after switching on the mobile device, or reintry into a region with network availability, e.g. after loss of connectivity to any network) a first IMSI (International Mobile Subscriber Identity) requesting service is transmitted from the SIM device of the mobile device to a network Y not being the home network of the first IMSI under a first MSISDN (Mobile Station International Subscriber Directory number), ii) the network Y sends a service request under provision of the first IMSI to the IGW and receives a service allowance there from, if the network Y is interconnected with the network core, iii) the SMSC of the network core sends a second IMSI to the SIM device of the mobile device thereby reprogramming the first IMSI to be replaced by the second IMSI as the active IMSI and providing a second MSISDN local for the network Y to the SIM device, iv) the SIM device of the mobile device is automatically restarted, thereby transmitting the second IMSI requesting service from the SIM device of the mobile device under the second MSISDN to the network Y and receiving service allowance from the network Y under registration as home mobile device under the second MSISDN, v) the MSC/NGN of the network core bridges the first MSISDN with the second MSISDN thereby allowing the mobile device being contacted by third telecommunication devices under the first MSISDN, but being registered as home mobile device at the network Y under the second MSISDN.

The network core, which is operated independent of the home network and the network Y or other networks, provides a SIM portability platform which is able to remotely and in real time rewrite the content of a programmable SIM device, making the mobile device always and everywhere able to attach into any network worldwide, as if such other networks were the home network. This process operates automatically without any need for a user of the mobile device to exchange hardware (SIM device) or manually execute specific software. The mobile device is used as normal always and everywhere. Furthermore, roaming costs are avoided. Finally and as a very important aspect, due to bridging of the first (home network) MSISDN (Mobile Station International Subscriber Directory Number) with the second (assigned by the other foreign network) MSISDN, incoming calls and other data transmissions (e.g. SMS) can use the same phone number of the mobile device as in the home network of the mobile device.

It may noted that the first IMSI/MSISDN is not deleted from the SIM device, but being permanently stored for bridging purposes. A third, etc. IMSI/MSISDN may be stored and reprogrammed as being active, depending on the mobile device moving along into any further network Z and so on. Actually any number of subsequent registrations of the mobile device in actually non-home networks is possible. In any case the actual IMSI/MSISDN Y, -Z, and so on, ist always bridged with the IMSI/MSISDN X, wherein it is assured that the mobile device is always reachable using the home network MSISDN, irrespectively in which actually non-home network the actual registration (as local/home) has taken place.

Generally the instant invention can be used with any kind of mobile device using SIM devices for operation in networks. Typical examples are: a mobile phone, a smart phone, a tablet, or a modem, provided in a car or in a computer device.

The IMSI typically comprises a MCC (Mobile Country Code) and a MNC (Mobile Network Code), wherein the bridging of the first MSISDN and the second MSISDN takes place either if the MCC or the MNC, or both, differ from the MCC and/or the MNC of the mobile device being the home device to a network. In case of other unique identification standards for mobile devices, according identifiers can be used in just the same manner.

The authentication of a mobile device may occur within the network core. For this purpose an authentication information can be transmitted from the SIM device of the mobile device to the network Y, wherein said authentication information can further be transmitted from the network Y to the network core, wherein the authentication information can be checked in a cAUC

(Authentication Center, preferably Custom and Re-Programmable) integrated into the network core, and wherein the service request from the network Y can be allowed, if said check is positive, and refused, if said check is negative.

The network core can further comprise a cHLR (Home Location Register, preferably Custom and Re-Programmable), in which the network is registered, to which the mobile device is a home mobile device.

The network core can further comprise a cHSS (Home Subscriber Server, preferably Custom and Re-Programmable), in which the network is registered, to which the mobile device is a home mobile device.

The SIM device may be a SIM card or a SIM chip embedded into electronic circuits of the mobile device. In the latter case the SIM chip is typically soldered to the electronic circuits and, thus non-exchangeable.

The instant invention works independent of any kind of reason why the home network is not available for the mobile device. The mobile device may locate in the same country as the country of the network to which the mobile device is a home mobile device, but being connected to network Y. The mobile device may as well be located in a different country as the country of the network to which the mobile device is a home mobile device.

The invention further teaches a method for the transmission of information to a mobile device being located outside a network to which the mobile device is a home mobile device, wherein the method of one of the claims 1 to 10 is executed upon switching on of the mobile device, and wherein the information is transmitted as if the mobile device were a home mobile. The information transmission thereby uses the same IMSI as the IMSI of the mobile device in the home network.

In the following the invention is explained by way of an example, which shall not be interpreted as a limitation but as one of various possible examples for executing the invention.

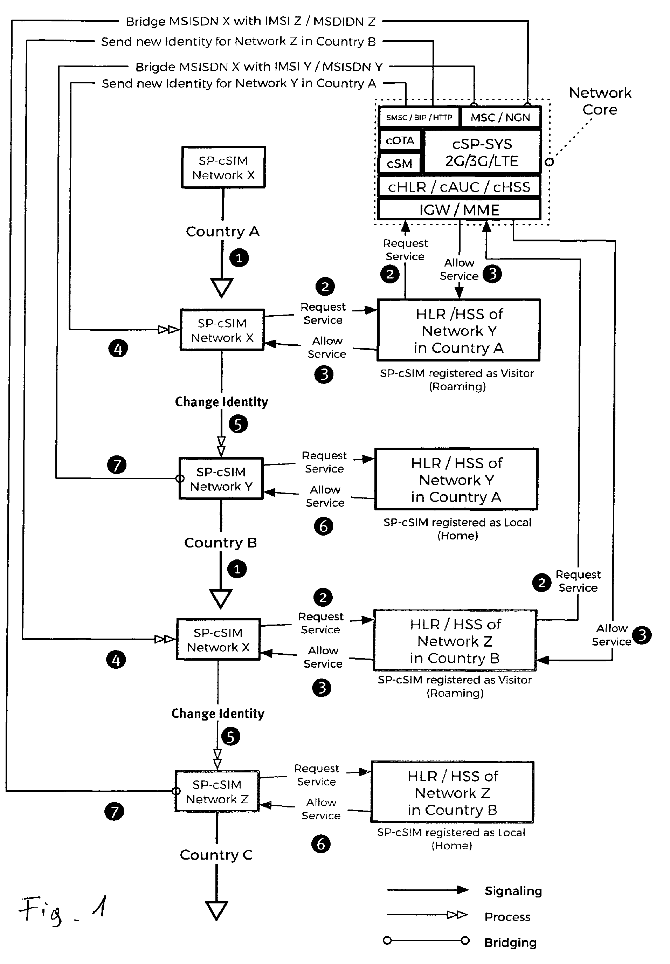

The Figure 1 shows an operation flow diagram according to the invention.

The SIM device, called SP-cSIM normally is programmed to operate in the network X, in which the mobile device is operated as home mobile device, i.e. which is the home network to the mobile device.

Step 1 describes the situation when the mobile device is switched on in a country A, wherein the home network is not available to the mobile device, i.e. the MCC/MNC on the SIM device does not match the MCC/MNC of the network Y. The mobile device will then send data to the network Y identifying the mobile device and providing authorization data as required.. The network Y will then send these data to the network core, in particular the cHLR and/or cHSS and/or cUAC within the network core, see step 2. In response thereto (positive authentication assumed) the network core sends data to the network Y allowing service, see step 3. In response thereto the network Y authorizes the mobile device as a visiting mobile device (roaming), see step 3. Within this process the network core has obtain all processing information about the identity of the mobile device as well as about the network Y and the country wherein this network Y is located.

As a step 4 the cSP-SYS (Custom SIM Portability Core System) will generate the appropriate SIM device information with an IMSI Y, wherein the MCC and MNC will match the requesting network Y. The cSP-SYS will then transmit this information to the cSM (Custom and reprogrammable Subscription Manager) within the network core for proper encoding and encryptation (using the right keys). The data then are transmitted to the SMSC (Short Message Service Center) of the network core and sent to the mobile device, wherein the SIM device is reprogrammed using these data, provided that the data are identified as intended for this specific SIM device and after decrypting of the data, see steps 4 and 5. Within step 5 the SIM device is restarted, wherein the "identity" of the SIM device has changed for the mobile device to allow registration in the network Y as a home network.

The mobile device then requests service and receives allowance under the new "identity" with the network Y, thus as if the network Y were the home network of the mobile device, because the IMSI Y will contain the matching MCC/MNC as of the network Y (step 6).

Then the cSP-SYS creates and registers a virtual IMSI X and bridges this IMSI X to the new SIM device data (IMSI Y), which had been transmitted to the mobile device in a previous step. Thus, the home mobile number MSISDN X and the new mobile number MSISDN Y are bridged together (step 7). The mobile device is thus not only reachable under the new MSISDN Y number, but also under the old (home network) MSISDN X number.

The steps 1 to 7 are repeated every time the mobile device is moving to a new network as exemplified by the network Z in the Figure. Important to note is that in any case bridging of a new MSISDN Z (and so on) number always occurs with the (home) MSISDN X.

## Claims

1. Method for operating a mobile device in different networks, wherein the mobile device is operable in the different networks as home mobile device to the networks,
wherein the mobile device comprises one SIM (Subscriber Identity Module) device, said SIM device being reprogrammable remotely,
wherein said different networks are in communication with an IGW (international gateway) comprised in a network core,
wherein the IGW of the network core is programmedly connected within the network core with a SMSC (Short Message Service Center) and a MSC (Mobile Switching Center) and/or a NGN (Next Generation Network),
comprising the following steps:
upon successful network search by the mobile device a first IMSI (International Mobile Subscriber Identity) requesting service is transmitted from the SIM device of the mobile device to a network Y not being the home network of the first IMSI under a first IMSI (Mobile Station International Subscriber Directory number),
the network Y sends a service request under provision of the first MSISDN to the IGW and receives a service allowance there from, if the network Y is registered with the network core,
the SMSC of the network core sends a second IMSI to the SIM device of the mobile device thereby reprogramming the first IMSI to be replaced by the second IMSI as the active IMSI and providing a second MSISDN local for the network Y to the SIM device,
the SIM device of the mobile device is automatically restarted, thereby transmitting the second IMSI requesting service from the SIM device of the mobile device under the second IMSI to the network Y and receiving service allowance from the network Y under registration as home mobile device under the second MSISDN,
the MSC or the NGN of the network core bridges the first MSISDN with the second MSISDN thereby allowing the mobile device being contacted by third telecommunication devices under the first MSISDN, but being registered as home mobile device at the network Y under the second MSISDN.

2. The method of claim 1, wherein the mobile device is selected from a mobile phone, a smart phone, a tablet, a modem, provided in a car or in a computer device.

3. The method of claim 1 or 2, wherein the IMSI comprises a MCC (Mobile Country Code) and a MNC (Mobile Network Code), and wherein the bridging of the first MSISDN and the second MSISDN takes place either if the MCC or the MNC, or both, differ from the MCC and/or the MNC of the mobile device being the home device to a network.

4. The method of one of the claims 1 to 3, wherein an authentication information is transmitted from the SIM device of the mobile device to the network Y, wherein said authentication information is further transmitted from the network Y to the network core, wherein the authentication information is checked in a cAUC (Authentication Center, preferably Custom and Re-Programmable) integrated into the network core, and wherein the service request from the network Y is allowed, if said check is positive, and refused, if said check is negative.

5. The method of one of the claims 1 to 4, wherein the network core comprises a cHLR (Home Location Register, preferably Custom and Re-Programmable), in which the network is registered, to which the mobile device is a home mobile device.

6. The method of one of the claims 1 to 5, wherein the network core comprises a cHSS (Home Subscriber Server, preferably Custom and Re-Programmable), in which the network is registered, to which the mobile device is a home mobile device.

7. The method of one of the claims 1 to 6, wherein the SIM device is a SIM card or a SIM chip embedded into electronic circuits of the mobile device.

8. The method of one of the claims 1 to 7, wherein the mobile device is located in the same country as the country of the network to which the mobile device is a home mobile device, but being connected to network Y.

9. The method of one of the claims 1 to 8, wherein the mobile device is located in a different country as the country of the network to which the mobile device is a home mobile device.

10. Method for transmission of information to a mobile device being located outside a network to which the mobile device is a home mobile device, wherein the method of one of the claims 1 to 9 is executed upon switching on of the mobile device, and wherein the information is transmitted as if the mobile device were a home mobile device to the network Y.
